# EUROPEAN PATENT SPECIFICATION

(11) **EP 4 255 863 B1**
(45) Date of publication and mention of the grant of the patent: **12.02.2025**
(21) Application number: 21819489.2
(22) Date of filing: 02.12.2021
(51) Int. Cl.: C04B 7/52, C04B 28/04

(54) **PORTLAND CEMENT WITH INCREASED SHELF-LIFE**
PORTLANDZEMENT MIT ERHÖHTER LAGERSTABILITÄT
CIMENT PORTLAND À DURÉE DE CONSERVATION PROLONGÉE

(30) Priority: 03.12.2020 EP 20306488
(43) Date of publication of application: 11.10.2023
(73) Proprietor: Holcim Technology Ltd, 6300 Zug (CH)
(72) Inventor: DION, Pascal, 5113 Holderbank (CH); MARTIN, Mylène, 5113 Holderbank (CH)
(74) Representative: Regimbeau
(86) International application number: PCT/EP2021/083907
(87) International publication number: WO 2022/117703

(56) References cited:
- US-A- 1 947 504

## Description

### FIELD OF THE INVENTION

The field of this invention is preparation and storage of a Portland cement. More precisely, it relates to a method for optimizing the grinding and storage process of a Portland cement and reducing the effect of the temperature on its shelf life.

### BACKGROUND OF THE INVENTION

The manufacturing of Portland cement is a complex process that begins with mining and then pre-grinding raw materials that include limestone and clay, to a raw meal which is then heated to a sintering temperature as high as 1 450°C in a cement kiln. In this process, the raw materials chemically react to form new compounds. The result is called clinker, which are rounded nodules typically between around 1 mm and 25 mm. Clinker is then cooled down and ground in large mills. The clinker is ground together with a source of calcium sulphate to produce a Portland cement. Other mineral additions and chemical additives can be added prior to, during or after the grinding to produce different types of Portland cements. For example, granulated blast furnace slag, pozzolans, gypsum are commonly added to the clinker prior to or during the step of grinding of the clinker.

Finally, the Portland cement is either stored in silos or packaged in bags before being transported to the client by road, rail, or on water.

However, a problem encountered with Portland cements is that of their shelf life.

In particular, it is well known known that a Portland cement may be exposed to moisture in the air and begins to partially react, which reduces its reactivity, or could even make it unusable in practice.

There are solutions for limiting water intake from moisture in ambient air which include use of waterproof bags, moisture protection during transport or manipulation of cement and/or use of specific additive to enhance the ageing properties of Portland cement.

For example, EP1409430 B1 discloses a hydraulic binder having reduced tendency to form lumps or set during storage, by reducing water intake from ambient air, comprising an organic acid selected from the group consisting of adipic acid and a mixture of adipic, glutaric and succinic acids, wherein the weight concentration of said organic acid is between 0.05 % and 5 % relative to the weight of hydraulic binder, and as a main component, a cement selected from the group consisting Portland cement, high-alumina cement, and quick setting cement.

US 1947504 A discloses a process for manufacturing a Portland cement wherein a Portland clinker is ground in presence of an oleaginous material, preferably oleic acid. It is also disclosed that the proportion of oleaginous material to be used in the grinding step should range between 0.05% and 1%.

The existing solutions offer interesting results in terms of enhancing the ageing properties of hydraulic binder, but prove to be insufficient with regard to other issues, in particular in terms of preparation and cost and of reduction of the effect of the temperature on the shelf life of the cement.

In particular, when hot freshly ground Portland cement is fed into a container such as a silo and stored in that container, caking may occur and block the exit trap of the container, in particular of the silo, even when the container is protected from moisture of ambient air. For this reason, hot freshly ground Portland cement is usually cooled before feeding the container. However, that intermediate step of cooling is expensive and can be complex to implement in a cement plant. In the context of the invention, the term "hot" refers to a temperature above 70°C.

Therefore, there is a need for an improved preparation method of Portland cement which is fully integrated in the industrial process and that allows to improve the shelf life of Portland cements.

It has surprisingly been discovered that caking may be induced by gypsum dehydration and that adipic acid at very low dosage may prevent the occurrence of caking.

### LEGEND OF THE FIGURES

Figure 1: Compressive strength of MReference1, Mcontrol1(70°C), Mcontrol1(80°C), CM1(70°C), CM(80°C), CM2(70°C) and CM2(80°C) mortars at 2 days (Figure 1A) and 28 days (Figure 1B).
Figure 2: Compressive strength of MReference2, Mcontrol2(70°C), IM1(70°C) and IM2(70°C) mortars at 2 days (Figure 2A) and at 28 days (Figure 2B).
Figure 3: TGA (Figure 3A) and DTG (Figure 3B) identification of decomposition of calcium sulphates depending on the temperature in Reference2, control2(70°C) and control2(80°C) cements.
Figure 4: DTG Identification of the protective effect of adipic acid by comparison of Reference2, control2(80°C), IHB1(80°C) and IHB2(80°C) cements.
Figure 5: Cr(VI) content, in ppm, of a CEM II cement co-ground with gypsum and with or without adipic acid stored in bag with plastic foil (figure 5A) or stored in paper bag (figure 5B).

### DESCRIPTION OF THE INVENTION

An aim of this invention is to overcome the drawbacks of the aforementioned prior art and to supply a method for producing and storing Portland cement without any intermediate cooling step prior to feeding the Portland cement into a container, such as a silo, and that can be thus easily integrated into an industrial process and in a cost effective way relative to the methods disclosed in the prior art. Another aim of the invention is to supply a Portland cement obtained according to the method of the invention.

These aims are achieved by the invention, which will be described below.

Therefore, a first aspect of the invention is a method for preparing and storing a Portland cement, wherein the method comprises:
(i) Providing at least:
   - a Portland clinker,
   - a source of calcium sulphate comprising gypsum in majority,
   - from 0.01 to 0.1% of an organic compound selected from adipic acid, stearic acid, 2,4,7,9-tetramethyl-5-decyne-4,7-diol, mixture of adipic, glutaric and succinic acids, their salts, and mixtures thereof, in % expressed by weight relative to the weight of Portland cement,
(ii) grinding the components of step (i) to produce a Portland cement;
(iii) feeding a container with the Portland cement obtained after step (ii), wherein the Portland cement has a temperature above 70°C when feeding the container.

When Portland cement comprising gypsum is stored at temperatures above 70°C, dehydration of gypsum occurs and may create caking of the Portland cement.

This problem could be reduced by reducing the temperature at which the clinker and the gypsum are co-ground, for example by cooling the Portland cement down at the exit of the mill before its storage in a container, or by reducing the temperature of the clinker that is introduced into the mill. However, these measures can be complex and costly to implement in the overall production process.

The Applicant unexpectedly discovered that producing a Portland cement by grinding at least a Portland clinker, a source of calcium sulphate comprising gypsum in majority and a very low dosage of an organic compound permitted to significantly decrease the caking of the Portland cement and improve its shelf-life.

Without wishing to be bound by a theory, the Applicant has observed that at a temperature above 70°C, gypsum tends to dehydrate, and that the slight amount of water released from the gypsum dehydration may partially hydrate the Portland cement, thereby creating caking and hampering final hydraulic properties of the Portland cement. Further, the Applicant discovered that although used at very low dosages, the organic compound allows to significantly and cost-effectively reduce the negative effects of such gypsum dehydration during the period of time when the Portland cement comprising gypsum is at a temperature above 70°C.

Indeed, the method of the invention advantageously permits to obtain a Portland cement comprising gypsum whose mechanical strength is largely preserved even when it is exposed to temperatures above 70°C, and during long term storage in standard conditions.

Advantageously, the Portland cement obtained according to the method of the invention maintain its mechanical performance even when stored in a container directly after the grinding step, meaning that the Portland cement may be stored in a container directly from the cement mill output, the Portland cement having a temperature above 70°C at the entry of the container. This is particularly advantageous in the framework of an industrial production, as the method of the invention avoids having the Portland cement to be cooled down at the output of the cement mill before its storage in a container.

Further, the method of the invention preserves the mechanic performance of the Portland cement obtained even after a long storage in standard conditions and in a container whose initial internal temperature is above 70°C. This is particularly advantageous in warm countries, where it provides for the possibility of storing the Portland cement for a long time in a container, such as a silo, with no loss of quality or performance of the Portland cement.

Thus, in the method of the invention, the grinding of a Portland clinker, a source of calcium sulphate comprising gypsum in majority and a very low dosage of organic compound allows to avoid the adverse effects mentioned above and to preserve the hydraulic properties of the Portland cement obtained thereof.

Also, in the method of the invention, the grinding of a Portland clinker, a calcium sulphate source comprising gypsum in majority and an organic compound allows an optimal distribution of the organic compound in the Portland cement obtained without any need of a subsequent homogenization step.

Importantly, the Applicant further observed that the organic compound did not negatively impact the operation of the mill, as no dust was observed, as well as no flushing of the mill when using the organic compound at dosages of less than 0.1%, in % expressed by weight relative to the weight of the Portland cement.

Thus, the method of the invention may easily be carried out in a cement manufacturing plant.

In particular, the method of the invention avoids the need to cool down the Portland cement at the exit of the mill before its storage in a container, or to reduce the temperature of the Portland clinker that is introduced into the mill.

Surprisingly, the Applicant further observed that the method of the invention results in a reduction of soluble Cr(VI) content in the cement. Accordingly, adding the organic molecule described below may allow to reduce the content of metal sulphate additive usually introduced in the cement to reduce soluble Cr(VI) content.

The method of the invention is thus both cost and energy effective and in addition decreases the processing time when compared to processes involving a step of mixing a ground clinker with an anti-ageing additive.

The method of the invention comprises a step (i) of providing a Portland cement comprising:
- a Portland clinker as defined in the Standard NF EN 197-1 of April 2012,
- a source of calcium sulphate comprising gypsum in majority,
- from 0.01 to 0.1% of an organic compound selected from adipic acid, stearic acid, 2,4,7,9-tetramethyl-5-decyne-4,7-diol, mixture of adipic, glutaric and succinic acids, their salts, and mixtures thereof, in % expressed by weight relative to the weight of the Portland cement.

In the present invention, a Portland cement is a material in powder form that chemically reacts with water, by converting the water-binder system with a plastic consistency into a solid matrix that has the ability to agglomerate other solid materials. This hardening process takes place spontaneously at room temperature, underwater or exposed to wet air conditions.

According to the present invention, the Portland cement comprises a Portland clinker and a source calcium sulphate. The Portland cement may contain mineral addition(s) and other additive(s) as detailed below.

The clinker has advantageously a mean diameter, D50, comprised from 1 to 25 mm. The Portland cement according to the invention is a Portland cement as defined in the cement standard NF EN 197-1 of April 2012.

A Portland cement comprises Portland clinker, calcium sulphate, and optional mineral components, such as those described in the cement standard NF EN 197-1 published in April 2012 and further defined below.

Portland clinker is obtained by clinkering at high temperature a mixture comprising limestone and, for example, clay.

Preferably, Portland clinker has preferentially the following mineralogical composition, in % expressed by weight relative to the weight of clinker:
- 50 to 80% of C3S (alite),
- 4 to 40% of C2S (belite),
- 0 to 20% of C4AF (ferrite or aluminoferrite or brownmillerite),
- 0 to 15% of C3A (aluminate),
- and secondary mineral phases.

The chemical components of Portland clinker may be noted according to the common cement industry notation: C represents CaO; A represents Al₂O₃; F represents Fe₂O₃, and S represents SiO₂.

Preferentially, the Portland cement is selected from a CEM I, CEM II, CEM III, CEM IV, or CEM V as described in the cement standard NF EN 197-1 of April 2012.

A CEM I comprises at least 95% of a Portland clinker, in % expressed by weight relative to the weight of CEM I.

The other cement types described in the cement standard NF EN 197-1 of April 2012 (CEM II, CEM III, CEM IV, CEM V) comprise Portland clinker, calcium sulphate, and mineral addition(s) as defined below.

The mineral addition, if any, is preferably selected from slags (for example, as defined in the European NF EN 197-1 Standard of April 2012, paragraph 5.2.2) such as granulated slags, pozzolanic materials (for example as defined in the European NF EN 197-1 Standard of April 2012, paragraph 5.2.3), fly ash (for example, as described in the European NF EN 197-1 Standard of April 2012, paragraph 5.2.4), calcined schists (for example, as described in the European NF EN 197-1 Standard of April 2012, paragraph 5.2.5), material containing calcium carbonate, for example limestone (for example, as defined in the European NF EN 197-1 Standard paragraph 5.2.6), silica fume (for example, as defined in the European NF EN 197-1 Standard of April 2012, paragraph 5.2.7), siliceous additions (for example, as defined in the "Concrete" NF P 18-509 Standard), metakaolin or mixtures thereof.

A fly ash is generally a powdery material comprised in the fumes from coal-fired thermal power stations. It is generally recovered by electrostatic or mechanical precipitation. The chemical composition of a fly ash mainly depends on the chemical composition of the coal burned and of the method used in the power plant from which it comes. The same is true for its mineralogical composition. The fly ashes used according to the invention may be of siliceous or calcic nature.

Blast furnace slags are generally obtained by rapid cooling of the molten slag coming from the melting of iron ore in a blast furnace. Slags may be selected from granulated blast furnace slags according to the European standard NF EN 197-1 of April 2012 paragraph 5.2.2.

Silica fumes may be a material obtained by reduction of high purity quartz by carbon in electric arc furnaces used for the production of silica and ferrosilica alloys. Silica fumes are generally formed of spherical particles comprising at least 85 % by weight of amorphous silica. Preferably, the silica fumes are selected from silica fumes according to the European standard NF EN 197-1 of April 2012 paragraph 5.2.7.

Pozzolanic materials may be natural siliceous or silico-aluminous substances, or a combination thereof. Among pozzolanic materials may be cited natural pozzolans, which are in general materials of volcanic origin or sedimentary rocks, and natural calcinated pozzolans, which are materials of volcanic origin, clays, schists or sedimentary rocks, thermally active.

Preferably, the pozzolanic materials may be selected from pozzolanic materials according to the European standard NF EN 197-1 of April 2012 paragraph 5.2.3.

### Source of calcium sulphate

Calcium sulphate used according to the present invention includes gypsum (calcium sulphate dihydrate, CaSO₄.2H₂O), hemi-hydrate (CaSO₄.1/2H₂O), anhydrite (anhydrous calcium sulphate, CaSO₄) or a mixture thereof. The gypsum and anhydrite exist in the natural state. Calcium sulphate produced as a by-product of certain industrial processes may also be used.

In the present invention, the expression "a source of calcium sulphate comprising gypsum in majority" means a source of calcium sulphate wherein gypsum predominate by weight, i.e. means a source of calcium sulphate containing at least 40% of gypsum, preferably more than 50% of gypsum, in % expressed by weight relative to the weight of the source of calcium sulphate. The source of calcium sulphate may further contain impurities, preferably in a content ranging from 0% to 30% in weight, compared to the total weight of the source of calcium sulphate.

Advantageously, the source of calcium sulphate further comprises calcium sulphate hemihydrate, anhydrite, or mixtures thereof.

Advantageously, the Portland cement comprises from 2 to 10%, preferably from 2 to 6%, preferably from 2 to 5%, of a source of calcium sulphate comprising gypsum in majority, in % expressed by weight relative to the weight of clinker.

### Organic compound

The organic compound is selected from adipic acid, stearic acid, 2,4,7,9-tetramethyl-5-decyne-4,7-diol, mixture of adipic, glutaric and succinic acids, salts thereof, and mixtures thereof. The organic compound is preferably selected from adipic acid, 2,4,7,9-tetramethyl-5-decyne-4,7-diol, mixture of adipic, glutaric and succinic acids, salts thereof, and mixtures thereof.

2,4,7,9-Tetramethyl-5-decyne-4,7-diol is commercially available under the name Surfynol 104.

Mixture of adipic, glutaric and succinic acids preferably comprises at least 50% by weight, compared to the total weight of the mixture, of adipic acid, more preferably at least 60% by weight of adipic acid.

The organic compound is preferably selected from adipic acid, mixture of adipic, glutaric and succinic acids, salts thereof, and mixtures thereof. The organic compound is more preferably adipic acid or a salt thereof. The sodium salt of adipic acid is preferred.

Advantageously, the Portland cement comprises from 0.01 to less than 0.05% of organic compound, preferably from 0.02 to 0.04%, more preferably from 0.02 to 0.035%, in % expressed by weight relative to the weight of Portland cement. Accordingly, at step (i) one provides from 0.01% to less than 0.05% of organic compound, preferably from 0.02% to 0.040%, in % expressed by weight relative to the weight of the Portland cement.

Salts of organic compounds can also be used, preferably sodium salt, calcium salt, copper salt, ammonium salt, nickel salt, or potassium salt. Sodium salt is preferred.

In the present invention, the organic compound may be supported by inorganic particles.

The inorganic particles are preferably made of an inorganic material suitable to support the organic compound, meaning that the material forming the inorganic particle is inert with regard to the organic compound.

In other terms, the inorganic material forming the inorganic particles is not likely to be attacked by the organic compound or to modify the chemical structure of the organic compound. Preferably, the inorganic particles are not particles based on materials that are capable of forming salts (adipates) with adipic acid, such as highly basic materials. Preferably, the particles used as support of the organic compound are particles based on silica or on alumina.

Silica-based particles comprise at least 50% of silica, preferably at least 80% of silica, and even more preferably at least 90% of silica, in % expressed by weight relative to the weight of inorganic particles.

The silica-based particles may contain precipitated silica, siliceous stone, or mixtures thereof. Precipitated silica is silica obtained by a precipitation reaction of a silicate, in particular an alkali metal silicate such as sodium silicate with an acid such as sulfuric acid.

Siliceous stone may in particular be diatomite. Diatomite is a naturally occurring, soft, siliceous sedimentary rock that is usually crumbled into a fine white to off-white powder. It has a particle size ranging from less than 3 µm to more than 1 mm, typically from 10 to 200 µm. Diatomite typically comprises from 80 to 90% of silica, 2 to 4% of alumina and 0.5 to 2% of iron oxide, in % expressed by weight relative to the weight inorganic particles.

The preparation method of inorganic particles as mentioned above is well known in the art.

The method comprises a step (ii) of grinding the components of step (i).

The grinding can be performed by any know means and is preferably performed at a temperature of at least 70°C.

Step (ii) is preferably carried out a temperature of at least 70°C, preferably of at least 75°C, more preferably of at least 80°C. Indeed, the Applicant has shown that the gypsum dehydration significantly impedes the properties of the Portland cement when step (ii) is carried out at temperatures exceeding 70°C. Advantageously, the temperature of step (ii) is below the decomposition temperature of the organic compound.

Step (ii) is preferably carried out a temperature ranging from 70°C to 150°C, and more preferably from 80°C to 120°C.

Step (ii) is preferably carried out in a milling unit.

In the present invention, the expression "milling unit" refers to units comprising a mill suitable to co-grind a clinker and a source of calcium sulphate, optionally together with at least one mineral addition. The milling unit may further comprise a particle separator to normalize the particle size of the ground mixture.

In the present invention, the mill may be any mill which can be used for grinding clinker, especially at temperature above 70°C, such as a ball mill or a roll mill

Preferably, the grinding step (ii) is carried out in a ball mill or a vertical roll mill.

The grinding step (ii) is advantageously conducted so that the Blaine specific surface of the clinker at the end of step (ii) is comprised between 2 500 and 10 000 cm²/g. Preferably, the Blaine specific surface of the clinker at the end of step (ii) is comprised between 3 000 and 6 000 cm²/g.

The fineness of the ground clinker at the output of step (ii) may be expressed in terms of Blaine Specific Surface, as determined according to the determination of fineness standard NF EN 196-6 of December 2018.

### Grinding aid

The use of additives commonly referred to as grinding aids or grinding agent to facilitate the grinding of the clinker is known in the art. Their purpose is mainly to reduce the energy required to grind the Portland cement to a given fineness.

In the invention, the grinding aid may be added to the components of step (i) or during step (ii), preferably at a dosage of from 0.01 to 0.5%, advantageously of from 0.01 to 0.3%, in % expressed by weight relative to the weight of the components of step (i).

The grinding aid is preferably selected from polycarboxylate ethers, paraffin oil, rape seed oil, glycerin, dioxan, acetone, ethyl acetate, isopropanol, diethylene glycol, polyglycerol, diols (e.g. 1,2-propanediol, 1,2 hexane-diol, 1,2 butane-diol), acetic acid, alkanolamines (e.g. triethanolamine, diisopropanolamine, triisopropanolamine), lignosulfonates, and mixtures thereof.

### Chromium reducer

Chromium is an unavoidable trace element of the raw material used in the manufacture of Portland clinker. In particular, hexavalent chromium (Cr(VI)) may be formed in the oxidizing and alkaline burning condition of the cement kiln. Cr(VI) compounds are toxic because of their high solubility and oxidation potential and their ability to penetrate biologic tissues. The European Union legislation provides that cements should have levels of soluble Cr(VI), when water is added to the cement, of no more than 2 ppm (0.0002%) by weight of the dry cement.

The use of additives commonly referred to as Cr(VI) reducers or chromium reducers is known in the art. Their purpose is mainly to reduce the amount of water-soluble hexavalent chromium to trivalent chromium form because the trivalent form tends to precipitate from solution as a stable complex, thereby limiting the amount of soluble Cr(VI).

The chromium reducer is preferably sulphate of a metal, more preferably comprises a sulphate of iron(II), tin(II), antimony(III), or manganese(II). The chromium reducer preferably comprises iron (II) sulphate such as iron(II) sulphate heptahydrate or iron(II) sulphate monohydrate.

In the invention, the chromium reducer may be added to the components of step (i), during step or after (ii), preferably at a dosage of from 0.01 to 1.0%, advantageously of from 0.01 to 0.6%, in % expressed by weight relative to the weight of the Portland cement.

Indeed, the Applicant has shown the method of the invention allows a significant increase of the duration of the effectiveness of the Cr(VI) reducer. This effect may be used to reduce the amount of Cr(VI) reducer needed in the Portland cement.

The method can comprise a step of adding to the Portland cement additional component such as a mineral addition after step (ii) or during step (ii) and before step (iii).

The method comprises a step (iii) of feeding a container with the Portland cement obtained after step (ii), wherein the Portland cement has a temperature above 70°C when entering the container.

Preferably, the Portland cement has a temperature above or equal to 75°C, preferably above or equal to 80°C, when feeding the container. The Portland cement may be at a temperature up to 150°C, advantageously up to 120°C when feeding the container.

In the method, the Portland cement obtained after step (ii) is advantageously stored directly in a container at the end of step (ii), meaning that, except optional step of adding a mineral addition or additive, the method does not comprise intermediate step between step (ii) and step (iii). In particular, the Portland cement obtained after step (ii) is not cooled or let to be cooled before step (iii) of feeding the Portland cement in a container.

The container is advantageously a silo.

### Portland cement obtained by the method of the invention

A second aspect of the invention relates to a Portland cement obtained according to the method as defined in the first aspect of the invention, wherein the Portland cement comprises:
- a Portland clinker,
- a source of calcium sulphate comprising gypsum in majority,
- from 0.01 to 0.05%, preferably from 0.01 to less than 0.05%, more preferably from 0.02 to 0.04%, more preferably from 0.02 to 0.035% of an organic compound as defined in the first aspect of the invention, in % expressed by weight relative to the weight of Portland cement.

The Portland cement is as defined in the first object of the invention, in particular it advantageously comprises Portland clinker and optionally at least one mineral addition(s).

In particular, the Portland cement comprises a chromium reducer at a dosage of from 0.01 to 1.0%, advantageously of from 0.01 to 0.6%, in % expressed by weight relative to the weight of the Portland cement.

### Use

A third aspect of the invention also relates to the use of an organic compound selected from adipic acid, stearic acid, 2,4,7,9-tetramethyl-5-decyne-4,7-diol, mixture of adipic, glutaric and 10 succinic acids, salts thereof, and mixtures thereof during the grinding of a Portland cement comprising a Portland clinker and a source of calcium sulphate comprising gypsum in majority so as to allow to store the Portland cement obtained therefrom in a container directly after its hot grinding in a cement mill, while maintaining its mechanic properties during its subsequent storage, wherein the Portland cement is fed into the container at a temperature above 70°C, preferably at a temperature above 80°C.

In particular, the organic compound is preferably used in a weight concentration comprised between 0.01 to 0.1%, in % expressed in weight relative to the weight of Portland cement. Advantageously, the organic compound is preferably used in a weight concentration from 0.01 to 0.05% of organic compound, preferably from 0.01 to less than 0.05%, more preferably from 0.02 to 0.04%, more preferably from 0.02 to 0.035%, in % expressed by weight relative to the weight of Portland cement.

In particular, the Portland cement comprises a chromium reducer at a dosage of from 0.01 to 1.0%, advantageously of from 0.01 to 0.6%, in % expressed by weight relative to the weight of the Portland cement.

The Portland cement is obtained by the method of the first object of the invention or as defined in the second object of the invention.

Further aspects and advantages of the present invention will be disclosed in the following experimental section, which should be regarded as illustrative and not limiting the scope of the present application.

### EXAMPLES

### Example 1: Plant study

### 1. Material and methods

CEM II/B-L cements (composition according to the standard EN 197-1 of April 2012) from the plant of Surma (Bangladesh) were produced by co-grinding Portland clinker, limestone, and gypsum.

Adipic acid was added to the components of the CEM II/B-L cement. The mixes were co-ground to a surface specific Blaine of 4 350 +/- 100 cm²/g.

A cement CEM II/B-L whose components were co-ground with 0.1% of adipic acid by weight of cement and with 0.035% of grinding aid by weight of cement is referred as "Cement A" in the following. The grinding step lasted 3 hours.

A cement CEM II/B-L whose components were co-ground with 0.025% of adipic acid of by weight cement and with 0.03% of grinding aid by weight cement is referred as "Cement B" in the following. The grinding step lasted 4 hours.

### 2. Results

### 2.1. Cement mill operation

The results are detailed in Table 1.

**Table 1**

| **Cement** | **Main findings of cement mill operation** |
|---|---|
| Cement A | mill flushing difficulties appear |
| Cement B | No significant change in operation |

Cement B (0.025% adipic acid addition) showed no significant changes in industrial operation. With Cement A (0.1% adipic acid addition), risks of mill flushing appear.

### 2.2. Anti-ageing properties

The aging test is done by storing the ground cements at a depot located in a place where ambient temperature is above 30°C.

A cement CEM II/B-L whose components were co-ground with 0.035% of grinding aid by weight of cement but without any adipic acid addition is referred as "Ref. A" in the following. The grinding step lasted 3 hours.

A cement CEM II/B-L whose components were co-ground with 0.03% of grinding aid by weight of cement but without any adipic acid addition is referred as "Ref. B" in the following. The grinding step lasted 4 hours.

Ref. A and Ref. B are used as references.

**Table 2**

| | **Grit/Lump %** | | | |
|---|---|---|---|---|
| **Week** | **Ref. A** | **Cement A** | **Ref. B** | **Cement B** |
| 3 | 0.53 | 0.00 | | |
| 5 | 2.03 | 0.00 | 0.30 | 0 |
| 6 | 1.26 | 0.00 | | |
| 7 | 1.34 | 0.00 | 2.00 | 0.15 |
| 8 | 0.96 | 0.00 | 3.00 | 0.35 |
| 9 | 2.45 | 0.00 | 3.20 | 0.48 |
| 10 | 2.88 | 0.00 | 5.50 | 0.84 |
| 11 | 5.55 | 0.00 | 6.01 | 1.02 |
| 12 | 7.8 | 0.00 | 9.23 | 1.42 |

The results detailed in Table 2 show a visible effect of acid adipic at 0.025% and 0.1% on lump formation after 12 weeks.

### Example 2: Laboratory study

### 1. Material and methods

In this example, an industrial CEM III/A 42.5 N-LH CE PM-ES-CP1 NF containing less than 1% by weight of gypsum is used. This cement is referred as "CEM III" in the following. More specifically, CEM III contains a source of calcium sulphate mainly comprising hemihydrate. The quantity of gypsum provided by the source of calcium sulphate is below 1% by weight of the CEM III.

In a first set of experiments, the CEM III cement is co-ground with 0.025% or 0.5% of adipic acid in % by weight of cement weight into a heating ball mill at 70°C.

In a second set of experiments, the CEM III cement is co-ground with 0.025% or 0.5% of adipic acid by weight of cement and with 2.5% of gypsum by weight of cement into a heating ball mill at 70°C.

In this second set of experiment, the grinding step increases the Blaine Specific Surface of CEM III cement by around +40 cm²/g.

The ground mixes are then placed in sealed boxes at 70°C or 80°C during 7 days. These conditions simulate a long-term storage of those mixes in containers such as silos at high temperature, especially at ambient temperature above 30°C.

### 2. Results

### 2.1. Effect of the adipic acid on CEM III without gypsum addition (first set of experiments - comparative)

The cements are placed in sealed boxes at 70°C and 80°C (or at ambient temperature, 20°C, for reference).

After 7 days of storage at 70°C or 80°C (ambient for Reference), the sealed boxes are placed at ambient temperature for 3 days.
Reference1: CEM III without gypsum addition and without adipic acid addition, stored at ambient temperature
Control1 (70°C): CEM III without gypsum addition and without adipic acid addition, stored at 70°C
Control1 (80°C): CEM III without gypsum and without adipic acid, stored at 80°C
CHB1(70°C): CEM III without gypsum addition co-ground with 0.025% of adipic acid, in % by weight of cement weight, stored at 70°C
CHB1(80°C): CEM III without gypsum addition co-ground with 0.025% of adipic acid, in % by weight of cement weight, stored at 80°C
CHB2(70°C): CEM III without gypsum addition co-ground with 0.5% of adipic acid, in % by weight of cement weight, stored at 70°C
CHB2(80°C): CEM III without gypsum addition co-ground with 0.5% of adipic acid, in % by weight of cement weight, stored at 80°C

The cements are then mixed with water and the mechanical resistances of the mortars obtained are measured according to the standard EN196-1 of September 2016.

To allow for a relevant comparison between the samples, the results are corrected for the air amount, meaning that the values of compressive strength are recalculated for a zero porosity by linear extrapolation.
MReference1: mortar based on reference 1
Mcontrol1 (70°C): mortar based on control 1(70°C)
Mcontrol1 (80°C): mortar based on control 1(80°C)
CM1(70°C): mortar based on CHB1(70°C)
CM1(80°C): mortar based on CHB1(80°C)
CM2 (70°C): mortar based on CHB2(70°C)
CM2 (80°C): mortar based on CHB2(80°C)

### 2.1.1. Compressive strength of the mortars at 2 days

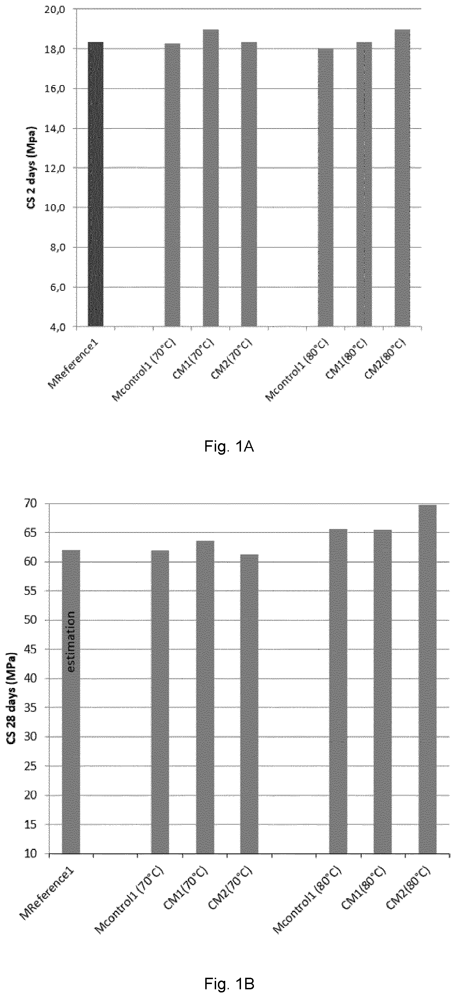

The results recalculated for a zero porosity are shown on Figure 1A. The compressive strength at 2 days of MReference1, Mcontrol1(70°C), Mcontrol1(80°C), CM1(70°C), CM(80°C), CM2(70°C) and CM2(80°C) are equivalent. This means that the mechanical resistance of the mortar at 2 days does not appear to be altered by a storage at 70°C or 80°C of the cement.

### 2.1.2. Compressive strength of the mortars at 28 days

The results recalculated for a zero porosity are shown on Figure 1B.

The compressive strength at 28 days of MReference1, Mcontrol1(70°C), Mcontrol1(80°C), CM1(70°C), CM1(80°C), CM2(70°C) and CM2(80°C) are equivalent. This means that the mechanical resistance of the mortar at 28 days does not appear to be altered by a storage of the cement at 70°C or 80°C.

This is coherent with the fact that CEM III cement assayed here does not contain significant amount of gypsum. This cement has a low sensitivity to a storage at high temperature, and the adipic acid treatment does not change its mechanical performances.

### 2.2. Effect of the adipic acid on a cement containing gypsum (second set of experiments - invention)

Control 2, IHB1 and IHB2are placed in sealed boxes at 70°C and 80°C. Reference 2 is placed in sealed boxes at ambient temperature (20°C).

After 7 days of storage at 70°C or 80°C, the sealed boxes are placed at ambient temperature for 4 days.
Reference2: CEM III co-ground with 2.5% of gypsum but without adipic acid addition, in % by weight of cement weight, stored at ambient temperature
Control2 (70°C): CEM III co-ground with 2.5% of gypsum but without adipic acid addition, in % by weight of cement weight, stored at 70°C
Control2 (80°C): CEM III co-ground with 2.5% of gypsum but without adipic acid addition, in % by weight of cement weight, stored at 80°C
IHB1(70°C): CEM III co-ground with 2.5% of gypsum and with 0.025% of adipic acid, in % by weight of cement weight, stored at 70°C
IHB1(80°C): CEM III co-ground with 2.5% of gypsum and with 0.025% of adipic acid, in % by weight of cement weight, stored at 80°C
IHB2(70°C): CEM III co-ground with 2.5% of gypsum and with 0.5% of adipic acid, in % by weight of cement weight, stored at 70°C
IHB2(80°C): CEM III co-ground with 2.5% of gypsum and with 0.5% of adipic acid, in % by weight of cement weight, stored at 80°C

These cements are then mixed with water and the mechanical resistances of the mortars obtained are determined. The results are corrected for the same air amount (the values of mechanical resistances are given at zero porosity).
MReference2: mortar based on Reference 2
Mcontrol2 (70°C): mortar based on control 2(70°C)
Mcontrol2 (80°C): mortar based on control 2(80°C)
IM1(70°C): mortar based on IHB1(70°C)
IM1(80°C): mortar based on IHB1(80°C)
IM2 (70°C): mortar based on IHB2(70°C)
IM2 (80°C): mortar based on IHB2(80°C)

### 2.2.1. Mortars at 2 days

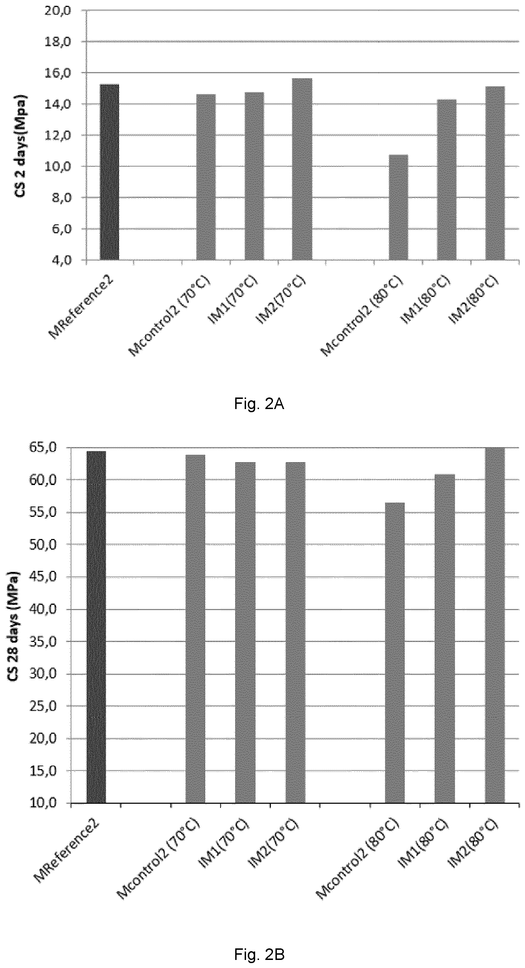

The results recalculated for a zero porosity are shown on Figure 2A.

The compressive strength of MReference2, Mcontrol2(70°C), IM1(70°C) and IM2(70°C) are equivalent.

The compressive strength of Mcontrol2(80°C) is altered and fell by about 30% (from 15 MPa to 10.5 MPa), in comparison to MReference 2. IM1(80°C) and IM2(80°C) have a compressive strength above 14 Mpa, and thus greater than Mcontrol2(80°C). IM2(80°C) has a compressive strength (14.1 MPa) equivalent to MReference2 (15 MPa).

### 2.2.2. Mortars at 28 days

The results recalculated for a zero porosity are shown on Figure 2B.

The compressive strength of MReference2, Mcontrol2(70°C), IM1(70°C) and IM2(70°C) are equivalent. The results found at 2 days are confirmed for Mcontrol2(80°C), IM1(80°C) and IM2(80°C). At 28 days, the compressive strength of Mcontrol2(80°C) is altered and fell by 12% (from 65 MPa to 57.2 MPa) whereas IM1(80°C) and IM2(80°C) present very good compressive strength (60 MPa for IM1(80°C) and 65 MPa for IM2(80°C), to be compared with a value of 65 MPa for MReference2.

### 2.3. Remarks

These results show a phenomenon of pre-hydration of a cement co-ground with 2.5% gypsum (% by weight of cement) during its storage at temperatures above 70°C when no adipic acid is added.

### 2.4. Thermogravimetric Analysis (TGA) of cement containing gypsum and treated or not with adipic acid

### 2.4.1. CEM III cement containing gypsum without adipic acid

Thermogravimetric analyses are performed on Reference2, control2(70°C) and control2(80°C) cements.

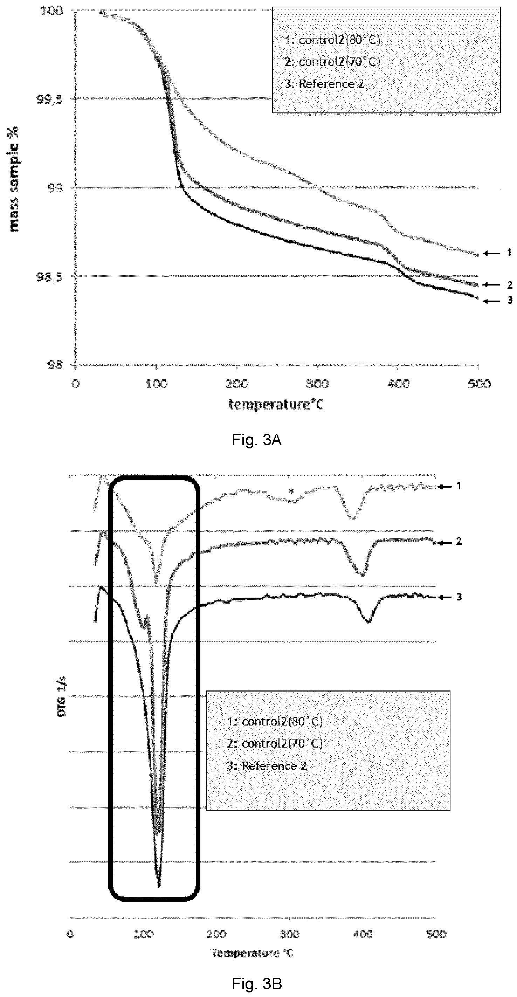

The results are shown in Figure 3A and Figure 3B.

On the TGA curves (Figure 3A), one can observe that between 50°C and 150°C, the loss in mass is less important in control2(80°C), meaning that there is less constituting water in that sample. This highlights the loss of water of crystallization of the hydrated calcium sulphates during the treatment at 80°C.

The derivated TGA curves i.e. the DTG curves (Figure 3B), illustrate the residual quantity of gypsum and/or of hemihydrate, and support the fact that the higher the storage temperature, the more those two hydrated calcium sulphates are dehydrated and thus become visible in TGA/DTG. The DTG curves (Figure 3B) of control2(70°C) are similar to Reference2 meaning that when treated at a temperature 70°C the alteration of the cement is hardly discernible. In contrast, the DTG curves (Figure 3B) of control2(80°C) clearly show an alteration of the cement. The symbol * illustrates the apparition of a hydrated phase.

### 2.4.2. CEM III cement containing gypsum treated with 0.025% or 0.5% of adipic acid

Thermogravimetric analyses are performed on Reference2, control2(80°C), IHB1(80°C) and IHB2(80°C).

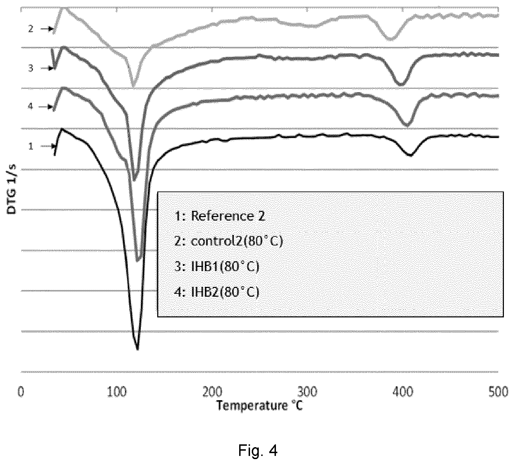

The results are shown in Figure 4.

On Figure 4, between 50°C and 150°C, the DTG curves illustrate the residual quantity of gypsum and/or hemihydrate in the samples (in connection with the peak area).

The clear signal reduction observed on the curve control2(80°C) is significantly reduced when the cement CEM III is co-ground in presence of 0.025% or 0.5% of adipic acid. The curves of the cements treated with 0.025% and 0.5% adipic acid and stored at 80°C, IHB1(80°C) and IHB2(80°C), have a profile similar to that of the reference cement, Reference2.

This means that the adipic acid protect the calcium sulphates and limits their dehydration at 80°C.

### Example 3: Effect on soluble Cr(VI) reduction

### 1. Material and methods

A CEMII/B M(LL-S) 32.5R cement has been used in these studies, hereafter called "CEMII". The relative composition of cements (at the grinder entry - at step (i) of the method) is given in the following table.

**Table 3**

| **Raw materials** | **Comparative CEM II** | **Invention CEM II** |
|---|---|---|
| Clinker La Malle | 70% | 70% |
| limestone | 17% | 17% |
| Slag | 13% | 13% |
| Gypsum | 3% | 3% |
| Grinding agent (*) ADM72 | 0.018% | 0.018% |
| Adipic acid | - | 0.05% |
| Iron(ll) sulphate heptahydrate | 0.2% | 0.2% |

| | | |
|---|---|---|
| (*) CHRYSO^{®} ADM72, sold by Chryso. | | |

### Grinding conditions:

- cement flow: 60 t/h
- product temperature (mill): 80 °C
- product temperature (bags): 43°C

After grinding, the cements have the same grain size curves.

Cement aging is monitored under identical storage conditions which are as follows:
- Paper bags with plastic foil or pure paper bags in a "dry" room, in the laboratory: humidity relative (RH) 50% and Temperature = 20°C
- Pater bags with plastic foil or pure paper bags on a classic pallet, in an outside hall For each measurement schedule, the samples and preparation are as follows:
- Each bag is homogenized by mixing before control
- On a classic pallet, take two bags:
   - 1 in the 4th row of the pallet,
   - 1 on the top row of the pallet.

Measurements of soluble Cr(VI) contents on cement are carried out initially and then monthly check of 1 to 3 months of cement age, according to the standard EN 196-10 of June 2017.

### 2. Results

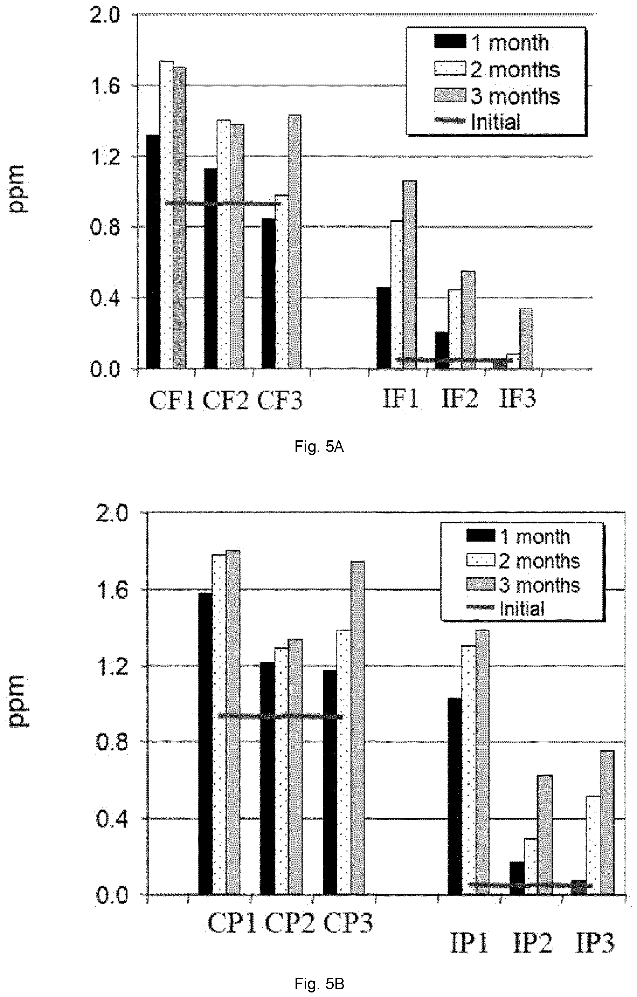

The results are shown in figure 5.
- CF1: Comparative CEM II stored in bag with plastic foil on the pallet 1^{st} row
- CF2: Comparative CEM II stored in bag with plastic foil in "dry" room
- CF3: Comparative CEM II stored in bag with plastic foil on the pallet 4^{th} row
- IF1: Invention CEM II stored in bag with plastic foil on the pallet 1^{st} row
- IF2: Invention CEM II stored in bag with plastic foil in "dry" room
- IF3: Invention CEM II stored in bag with plastic foil on the pallet 4^{th} row
- CP1: Comparative CEM II stored in pure paper bag on the pallet 1^{st} row
- CP2: Comparative CEM II stored in pure paper bag in "dry" room
- CP3: Comparative CEM II stored in pure paper bag on the pallet 4^{th} row
- IP1: Invention CEM II stored in bag pure paper bag on the pallet 1^{st} row
- IP2: Invention CEM II stored in bag pure paper bag in "dry" room
- IP3: Invention CEM II stored in bag pure paper bag on the pallet 4^{th} row

For bags with plastic foil (figure 5A), we see that addition of adipic acid significantly reduces the soluble Cr(VI) content in the cement.

In bag with plastic foil on the pallet 1^{st} row, soluble Cr(VI) content in comparative cement is initially at about 0.95 ppm, about 1.3 ppm after 1 month storage, about 1.7 ppm after 2 months storage, about 1.7 ppm after 3 months storage while the initial soluble Cr(VI) content is only at about 0.05 ppm in invention cement, about 0.45 ppm after 1 month storage, about 0.85 ppm after 2 months storage, about 1.05 ppm after 3 months storage.

In bag with plastic foil in "dry" room, soluble Cr(VI) content in comparative cement is initially at about 0.95 ppm, about 1.15 ppm after 1 month storage, about 1.4 ppm after 2 months storage, about 1.4 ppm after 3 months storage while the initial soluble Cr(VI) content is only at about 0.05 ppm in invention cement, about 0.2 ppm after 1 month storage, about 0.45 ppm after 2 months storage, about 0.5 ppm after 3 months storage. In bag with plastic foil on the pallet 4^{th} row, soluble Cr(VI) content in comparative cement is initially at about 0.95 ppm, about 1 ppm after 2 months storage, about 1.4 ppm after 3 months storage while the initial Cr(VI) content is only at about 0.05 ppm in invention cement, about 0.05 ppm after 1 month storage, about 0.1 ppm after 2 months storage, about 0.35 ppm after 3 months storage.

For bags with pure paper bag (figure 5B), we see that addition of adipic acid significantly reduce the soluble Cr(VI) content in the cement.

In paper bags of the 1^{st} row of a pallet covered with plastic foil , soluble Cr(VI) content in comparative cement is initially at about 0.95 ppm, about 1.6 ppm after 1 month storage, about 1.8 ppm after 2 months storage, about 1.8 ppm after 3 months storage while the initial soluble Cr(VI) content is only at about 0.05 ppm in invention cement, about 1 ppm after 1 month storage, about 1.25 ppm after 2 months storage, about 1.3 ppm after 3 months storage.

In paper bags covered with plastic foil in a "dry" room, soluble Cr(VI) content in comparative cement is initially at about 0.95 ppm, about 1.2 ppm after 1 month storage, about 1.25 ppm after 2 months storage, about 1.3 ppm after 3 months storage while the initial soluble Cr(VI) content is only at about 0.05 ppm in invention cement, about 0.2 ppm after 1 month storage, about 0.3 ppm after 2 months storage, about 0.6 ppm after 3 months storage.

In paper bags of the 4^{th} row of a pallet covered with plastic foil , soluble Cr(VI) content in comparative cement is initially at about 0.95 ppm, about 1.15 ppm after 1 month storage, about 1.4 ppm after 2 months storage, about 1.7 ppm after 3 months storage while the initial soluble Cr(VI) content is only at about 0.05 ppm in invention cement, about 0.05 ppm after 1 month storage, about 0.5 ppm after 2 months storage, about 0.75 ppm after 3 months storage.

Accordingly, adipic acid can also be used as further reducing soluble Cr (VI) contents, which in turn allows to reduce the iron sulphate dosage usually needed.

### Example 4: Reduction of dehydration of gypsum during grinding

In the current example, a CEM I 52.5R from the cement plant of Le Teil was ground at the laboratory at a temperature of 110°C. This cement contains 1.3% gypsum and 1.0% of hemihydrate, expressed in weight percentage of the weight of CEM I, measured by Differential Scanning Calorimetry (DSC).

The cement was further ground at 110°C for 500 rounds of the ball mill without addition or with 0.04%, expressed in weight percentage of the weight of CEM I, of adipic acid. The results summarised in the table below show that the addition of 0.04% adipic acid during the grinding step reduces the dehydration of the gypsum into hemihydrate.

**Table 4**

| **Cement** | **Grinding** | **DSC measurements** | |
|---|---|---|---|
| | | **Gypsum (%)** | **Hemihydrate (%)** |
| Cement before additional grinding | - | 1.3 | 1.0 |
| Cement with any addition | 500 rounds at 110°C | 0.6 | 1.5 |
| Cement with +0.04% adipic acid | 500 rounds at 110°C | 1.0 | 1.1 |

NB: anhydrite is also formed be dehydration of the gypsum but can not be detected by DSC as it is in a dehydrated form.

## Claims

1. A method for preparing and storing a Portland cement, wherein the method comprises:
(i) providing at least:
- a Portland clinker,
- a source of calcium sulphate comprising gypsum in majority,
- from 0.01 to 0.1% of an organic compound selected from adipic acid, stearic acid, 2,4,7,9-tetramethyl-5-decyne-4,7-diol, mixture of adipic, glutaric and succinic acids, salts thereof, and mixtures thereof, in % expressed by weight relative to the weight of the Portland cement,
(ii) grinding the components of step (i) to produce a Portland cement;
(iii) feeding a container with the Portland cement obtained after step (ii), wherein the Portland cement has a temperature above 70°C when feeding the container.

2. The method according to claim 1 wherein at step (i) one provides from 0.01% to less than 0.05% of organic compound, preferably from 0.02% to 0.040%, in % expressed by weight relative to the weight of the Portland cement.

3. The method according to any of the preceding claims wherein the source of calcium sulphate further comprises hemihydrate, anhydrite, or mixtures thereof.

4. The method according of any of the preceding claims, wherein at least one mineral addition is added to the Portland cement, prior, during or after the grinding step (ii).

5. The method according to claim 4, wherein the at least one mineral addition is selected from slags, pozzolanic materials, fly ash, calcined schists, material containing calcium carbonate, silica fume, siliceous additions, metakaolin or mixtures thereof.

6. The method according to any of the preceding claims wherein step (ii) is carried out at a temperature ranging from 70°C to 150°C, and more preferably from 80°C to 120°C.

7. The method according to any of the preceding claims wherein step (ii) is carried out in a milling unit chosen from a ball mill or a vertical roll mill.

8. The method according to any of the preceding claims wherein the grinding step (ii) is conducted so that the Blaine specific surface of the Portland clinker at the issue of step (ii) is comprised between 2 500 and 10 000 cm²/g.

9. A Portland cement obtained according to the method of any one of claims 1 to 8 comprising:
- a Portland clinker,
- a source of calcium sulphate comprising gypsum in majority,
- from 0.01% to less than 0.05%, preferably from 0.02% and 0.04% of an organic compound selected from adipic acid, stearic acid, 2,4,7,9-tetramethyl-5-decyne-4,7-diol, mixture of adipic, glutaric and succinic acids, salts thereof, and mixtures thereof, in % expressed by weight relative to the weight of Portland cement.

10. The Portland cement according to claim 9, further comprises at least one mineral addition is selected from blast furnace slags, pozzolanic materials, fly ash, calcined schists, material containing calcium carbonate, silica fume, siliceous additions, metakaolin or mixtures thereof.

11. Use of an organic compound selected from adipic acid, stearic acid, 2,4,7,9-tetramethyl-5-decyne-4,7-diol, mixture of adipic, glutaric and succinic acids, salts thereof, and mixtures thereof during the grinding of a Portland cement comprising a Portland clinker and a calcium sulphate source comprising gypsum in majority so as to allow to store the Portland cement obtained therefrom in a container directly after its hot grinding in a cement mill while maintaining its mechanic properties during its subsequent storage, wherein the Portland cement is fed into the container at a temperature above 70°C.

## Patentansprüche

1. Verfahren zur Herstellung und Lagerung eines Portlandzements, wobei das Verfahren Folgendes umfasst:
(i) Bereitstellen von mindestens:
- einem Portlandklinker,
- einer Calciumsulfatquelle, die mehrheitlich Gips umfasst,
- zwischen 0,01 und 0,1% einer organischen Verbindung, die ausgewählt wird aus Adipinsäure, Stearinsäure, 2,4,7,9-Tetramethyl-5-decyn-4,7-diol, Gemisch aus Adipin-, Glutar- und Succinsäuren, Salzen davon und Gemischen davon, in Gewichts-%, bezogen auf das Gewicht des Portlandzements,
(ii) Mahlen der Bestandteile von Schritt (i) zum Erzeugen eines Portlandzements;
(iii) Beschicken eines Behälters mit dem nach dem Schritt (ii) erhaltenen Portlandzement, wobei der Portlandzement beim Beschicken des Behälters eine Temperatur von über 70°C aufweist.

2. Verfahren nach Anspruch 1, wobei im Schritt (i) zwischen 0,01% und weniger als 0,05% organische Verbindung, vorzugsweise zwischen 0,02% und 0,040%, in Gewichts-%, bezogen auf das Gewicht des Portlandzements, bereitgestellt wird.

3. Verfahren nach einem der vorhergehenden Ansprüche, wobei die Calciumsulfatquelle ferner Halbhydrat, Anhydrit oder Gemische davon umfasst.

4. Verfahren nach einem der vorhergehenden Ansprüche, wobei dem Portlandzement vor, während oder nach dem Mahlschritt (ii) mindestens ein mineralischer Zusatzstoff zugesetzt wird.

5. Verfahren nach Anspruch 4, wobei der mindestens eine mineralische Zusatzstoff ausgewählt wird aus Schlacken, puzzolanischen Materialien, Flugasche, kalzinierten Schiefern, calciumcarbonathaltigem Material, Silikastaub, siliziumdioxidhaltigen Zusatzstoffen, Metakaolin oder Gemischen davon.

6. Verfahren nach einem der vorhergehenden Ansprüche, wobei der Schritt (ii) bei einer Temperatur in Bereich von 70°C bis 150°C, und mehr zu bevorzugen von 80°C bis 120°C, durchgeführt wird.

7. Verfahren nach einem der vorhergehenden Ansprüche, wobei der Schritt (ii) in einer Mahleinheit durchgeführt wird, die ausgewählt wird aus einer Kugelmühle oder einer Vertikalwälzmühle.

8. Verfahren nach einem der vorhergehenden Ansprüche, wobei der Mahlschritt (ii) derart vorgenommen wird, dass die spezifische Blaine-Oberfläche des Portlandklinkers beim Abschluss von Schritt (ii) zwischen 2500 und 10 000 cm²/g beträgt.

9. Portlandzement, der nach dem Verfahren nach einem der Ansprüche 1 bis 8 erhalten wird, umfassend:
- einen Portlandklinker,
- eine Calciumsulfatquelle, die mehrheitlich Gips umfasst,
- zwischen 0,01 und weniger als 0,05%, vorzugsweise zwischen 0,02% und 0,04%, einer organischen Verbindung, die ausgewählt ist aus Adipinsäure, Stearinsäure, 2,4,7,9-Tetramethyl-5-decyn-4,7-diol, Gemisch aus Adipin-, Glutar- und Succinsäuren, Salzen davon und Gemischen davon, in Gewichts-%, bezogen auf das Gewicht des Portlandzements.

10. Portlandzement nach Anspruch 9, der ferner mindestens einen mineralischen Zusatzstoff umfasst, der ausgewählt ist aus Hochofenschlacken, puzzolanischen Materialien, Flugasche, kalzinierten Schiefern, calciumcarbonathaltigem Material, Silikastaub, siliziumdioxidhaltigen Zusatzstoffen, Metakaolin oder Gemischen davon.

11. Verwendung einer organischen Verbindung, die ausgewählt ist aus Adipinsäure, Stearinsäure, 2,4,7,9-Tetramethyl-5-decyn-4,7-diol, Gemisch aus Adipin-, Glutar- und Succinsäuren, Salzen davon und Gemischen davon, während des Mahlens eines Portlandzements, der einen Portlandklinker und eine Calciumsulfatquelle umfasst, die mehrheitlich Gips umfasst, um das Lagern des davon erhaltenen Portlandzements in einem Behälter direkt nach seinem Heißmahlen in einer Zementmühle bei gleichzeitiger Bewahrung seiner mechanischen Eigenschaften während seiner anschließenden Lagerung umfasst, wobei der Behälter bei einer Temperatur von über 70°C mit dem Portlandzement beschickt wird.

## Revendications

1. Procédé pour préparer et stocker un ciment Portland, dans lequel le procédé comprend :
(i) la fourniture d'au moins :
- un clinker Portland ;
- une source de sulfate de calcium comprenant en majorité du gypse,
- de 0, 01 à 0,1 % d'un composé organique choisi parmi l'acide adipique, l'acide stéarique, le 2,4,7,9-tétraméthyl-5-décyne-4,7-diol, un mélange d'acides adipique, glutarique et succinique, leurs sels, et leurs mélanges, les pourcentages étant exprimés en poids par rapport au poids du ciment Portland,
(ii) le broyage des composants de l'étape (i) pour produire un ciment Portland ;
(iii) le chargement d'un récipient avec le ciment Portland obtenu après l'étape (ii), dans lequel le ciment Portland a une température supérieure à 70 °C lors du chargement du récipient.

2. Procédé selon la revendication 1, dans lequel, à l'étape (i), il est fourni de 0,01 % à moins de 0,05 %, de préférence de 0,02 à 0,040 %, de composé organique, les pourcentages étant exprimés en poids par rapport au poids du ciment Portland.

3. Procédé selon l'une quelconque des revendications précédentes, dans lequel la source de sulfate de calcium comprend en outre de l'hémihydrate, de l'anhydrite, ou leurs mélanges.

4. Procédé selon l'une quelconque des revendications précédentes, dans lequel au moins une addition de minéral est ajoutée au ciment Portland avant, pendant ou après l'étape de broyage (ii).

5. Procédé selon la revendication 4, dans lequel la au moins une addition de minéral est choisie parmi les laitiers, les matériaux pouzzolaniques, les cendres volantes, les schistes calcinés, les matériaux contenant du carbonate de calcium, la silice fumée, les additions siliceuses, le métakaolin ou leurs mélanges.

6. Procédé selon l'une quelconque des revendications précédentes, dans lequel l'étape (ii) est effectuée à une température située dans la plage allant de 70 °C à 150 °C, et mieux encore de 80 °C à 120 °C.

7. Procédé selon l'une quelconque des revendications précédentes, dans lequel l'étape (ii) est effectuée dans une unité de broyage choisie parmi un broyeur à billes et un broyeur à rouleaux verticaux.

8. Procédé selon l'une quelconque des revendications précédentes, dans lequel l'étape de broyage (ii) est effectuée de façon que la surface spécifique Blaine du clinker Portland à la fin de l'étape (ii) soit comprise entre 2 500 et 10 000 cm²/g.

9. Ciment Portland obtenu conformément au procédé de l'une quelconque des revendications 1 à 8, comprenant :
- un clinker Portland,
- une source de sulfate de calcium comprenant en majorité du gypse,
- de 0,01 à moins de 0,05 %, de préférence de 0,02 % à 0,04 %, d'un composé organique choisi parmi l'acide adipique, l'acide stéarique, le 2,4,7,9-tétraméthyl-5-décyne-4,7-diol, un mélange d'acides adipique, glutarique et succinique, leurs sels, et leurs mélanges, les pourcentages étant exprimés en poids par rapport au poids du ciment Portland.

10. Ciment Portland selon la revendication 9, comprenant au moins en outre une addition de minéral choisie parmi les laitiers de haut fourneau, les matériaux pouzzolaniques, les cendres volantes, les schistes calcinés, les matériaux contenant du carbonate de calcium, la silice fumée, les additions siliceuses, le métakaolin ou leurs mélanges.

11. Utilisation d'un composé organique choisi parmi l'acide adipique, l'acide stéarique, le 2,4,7,9-tétraméthyl-5-décyne-4,7-diol, un mélange d'acides adipique, glutarique et succinique, leurs sels, et leurs mélanges, pendant le broyage d'un ciment Portland comprenant un clinker Portland et une source de sulfate de calcium comprenant en majorité du gypse de façon à permettre le stockage du ciment Portland obtenu à partir de ceux-ci dans un récipient directement après son broyage à chaud dans un broyeur à ciment tout en maintenant ses propriétés mécaniques durant son stockage subséquent, dans laquelle le ciment Portland est chargé dans le récipient à une température supérieure à 70 °C.
